# EUROPEAN PATENT APPLICATION

(11) **EP 1 770 998 A2**
(43) Date of publication of application: **04.04.2007**
(21) Application number: 06020015.1
(22) Date of filing: 25.09.2006
(51) Int. Cl.: H04N 5/50

(54) **Digital broadcast receiving unit**

(30) Priority: 30.09.2005 JP 2005285775
(71) Applicant: ORION ELECTRIC CO., Ltd., Takefu-City, Fukui 915-8555 (JP)
(72) Inventor: Imadate, Hiroyuki, Takefu-city Fukui 915-855 (JP); Kataoka, Yusuke, Takefu-city Fukui 915-855 (JP); Umeda, Yuji, Takefu-city Fukui 915-855 (JP); Shimasaki, Takashi, Takefu-city Fukui 915-855 (JP)
(74) Representative: Goddar, Heinz J.

(57) **Abstract**

It is an object of the invention to provide a digital broadcast receiving unit capable of restraining the influence of a noise generated in a digital signal processing circuit (30) to be exerted upon a turner unit (2), and of arranging a digital signal processing circuit board (3) close to the tuner unit (2) while restraining the influence exerted upon a peripheral circuit thereof and so forth even if the tuner unit (2) is laid out on any location of a main circuit board (1). Both the tuner unit (2) and the digital signal processing circuit board (3) substantially stand upright on the main circuit board (1), respectively. The digital signal processing circuit board (3) is disposed close to the tuner unit (2) along the longitudinal direction thereof, and the digital signal processing circuit board (3) has a mounting face on which electronic components such as ICs and so forth are mounted at a side facing tuner unit (2). Ground patterns are formed on the digital signal processing circuit board (3) at a side opposite to the tuner unit (2) and is rendered in an exposed state having no sealed case (4).

## Description

### FIELD OF THE INVENTION

The invention relates to a digital broadcast receiving unit for use in a TV receiver for receiving a digital broadcast, a TV receiver for receiving a digital broadcast and an analog broadcast, a set-top box for receiving a digital broadcast, and so forth.

### BACKGROUND OF THE INVENTION

A digitization of a TV broadcast has been recently proceeded worldwide, and a technological development and an industrial infrastructure have been proceeded also in Japan aiming to digitize a terrestrial TV broadcast until the end of 2006, whereby it has been considered that the digital broadcast becomes rapidly popular hereafter.

Although a technological development of equipment such as a TV receiver for receiving the digital broadcast and so forth has been proceeded as the digital broadcast becomes popular, the existing analog broadcast is broadcasted concurrently with the digital broadcast, causing a problem of the development of a TV receiver capable of receiving both he analog broadcast and the digital broadcast.

In the case of receiving both the analog broadcast and the digital broadcast, an analog signal and a digital signal have to be processed concurrently, causing a problem of the generation of a noise at the time of processing both signals having different properties. In particular, an analog signal processing is susceptible to the influence of the noise generated when processing the digital signal, and there has been taken a measure therefore. For example, Patent Document 1 discloses that analog system terminals and digital system terminals of a tuner unit and a demodulator unit are disposed separately, and they are connected to each other respectively by an analog signal pattern and a digital signal pattern, and respective ground electrodes thereof are disposed opposite to each other. Further, Patent Document 2 discloses that in a receiving circuit of a TV receiver capable of accessible to both an ATSC system and an NTSC system, a tuner and an IF circuit for the NTSC system and so forth are formed on a main board, wherein the IF circuit for the ATSC system is formed on a sub-board, and the sub-board is fitted to the main board so as to stand upright thereon, and a sealed case for coving the IF circuit for the ATSC system is fitted to the sub-board.
Patent Document 1: JP 2002-152063 A
Patent Document 2: JP 2002-158594 A

According to the Patent Document 1 described above, although the noise exerting influence upon the tuner unit from the demodulator unit is restrained, it is not sufficient to restrain the noise leaked to the periphery of the demodulator unit from the periphery from the demodulator unit. That is, in the case where signals are leaked from an adjustment hole or a detection hole provided in the case, there is a likelihood of exerting an influence, e.g. upon a wiring of the analog signal.

Further, according to Patent Document 2, although it is possible to restrain the influence of the signal leaked from the IF circuit for the ATSC by covering the entire IF circuit for the ATSC with the sealed case, resulting in additionally requiring a space for installing the sealed case, while if the IF circuit for the ATSC is laid out at a location remote from the tuner, a wiring from the turner to the IF circuit for the ATSC becomes long, resulting in being susceptible to the influence of the noise.

### SUMMARY OF THE INVENTION

Therefore, it is an object of the invention to provide a digital broadcast receiving unit capable of restraining the influence of a noise generated in a digital signal processing circuit to be exerted upon a turner, and of arranging a digital signal processing circuit board close to the tuner unit while restraining the influence exerted upon a peripheral circuit thereof and so forth even if the tuner is laid out on any location of a main circuit board.

The digital broadcast receiving unit of the invention is characterized in comprising a tuner unit for receiving a digital broadcast signal, a digital signal processing circuit board disposed close to the tuner unit in a longitudinal direction thereof for processing an output signal issued from the tuner unit, a main circuit board for mounting the tuner unit and the digital signal processing circuit board thereon, wherein the digital signal processing circuit board has a mounting face on which electronic components are mounted at a side facing the tuner unit and a sealed case for covering the mounting face alone is fitted to the digital signal processing circuit board, and ground patterns are formed on the digital signal processing circuit board at a side opposite to the tuner unit. The digital broadcast receiving unit is further characterized in that the ground patterns formed on the digital signal processing circuit board have areas occupying 50% or more of the digital signal processing circuit board. The digital broadcast receiving unit is still further characterized in that the sealed case has a heat-radiation member coming in contact with the electronic components mounted on the digital signal processing circuit board.

With the digital broadcast receiving unit having the configuration described above, since the digital signal processing circuit board is disposed close to the tuner unit, the wiring from the tuner unit to the digital signal processing circuit board can be shortened to the utmost, so that the influence of the noise exerted from the outside can be restrained. Further, since the digital signal processing circuit board is disposed close to the tuner unit along the longitudinal direction of the tuner unit, use economy of the mounting space on the main circuit board can be eliminated, thereby rendering the main circuit board compact.

Since the digital signal processing circuit board is disposed close to the tuner unit, the tuner unit is subject to the influence of the noise leaked from the digital signal processing circuit board. However since the sealed case for covering the mounting face is fitted to the digital signal processing circuit board at the tuner unit side, it is possible to restrain the influence of the noise caused by electromagnetic waves generated in the digital signal processing circuit board. Further, since the face of the digital signal processing circuit board on which the electronic components such as a digital signal processing IC and so forth serving as a source of generation of the noise are mounted is disposed opposite to the tuner unit side, and the ground patterns are formed on the side opposite to the mounting face, so that the noise caused by the electromagnetic waves leaked from the digital signal processing IC and so forth is to be sealed by the ground patterns. Accordingly, even if a seal member is not provided separately at the side opposite to the tuner unit side of the digital signal processing circuit board, leakage of the noise can be restrained, and it is sufficient to fit the sealed case only to the tuner unit side, thereby reducing the mounting space at the degree corresponding thereto. Finally, since the sealed case is provided at one side of the digital signal processing circuit board and the ground patterns are formed at the other side thereof to restrain the leakage of the noise, even if the digital signal processing circuit board is disposed at any location of the main circuit board in a state where it is disposed close to the tuner unit, it is not necessary to consider the influence of the noise exerted upon the outside, so that the degree of layout of the main circuit board can be enhanced at the degree corresponding thereto.

Since the ground patterns formed on the digital signal processing circuit board have areas occupying 50% or more of an area of the digital signal processing circuit board, the sealed effect of the noise like the sealed case can be attained.

Further, since the heat-radiation member which comes in contact with the electronic components mounted on the digital signal processing circuit board is provided on the sealed case, heat generated in the electronic components such as the digital signal processing IC and forth can be radiated by the entire sealed case via the heat-radiation member, so that radiation of heat from the electronic components can be effectively executed even in a state where the mounting face of the digital signal processing circuit board is disposed close to the tuner unit.

### BRIEF DESCRIPTION OF THE DRAWINGS

Fig. 1 is an external perspective view according to an embodiment of the invention;
Fig. 2 is a block diagram showing a construction of a TV receiver provided with the embodiment of the invention;
Fig. 3 is an exploded perspective view of a digital signal processing circuit board and a sealed case according to the embodiment of the invention;
Fig. 4 is a perspective view of the sealed case;
Fig. 5 is a perspective view showing that the digital signal processing circuit board is formed of a multilayer board;
Fig. 6 is a schematic view showing a sample of ground patterns;
Fig. 7A to Fig. 7C are views each showing a result of experiment representing a sealed effect caused by the ground patterns;
Fig. 8A to Fig. 8C are perspective views each showing an example of arrangement of a tuner unit and a digital signal processing circuit board respectively provided on a main circuit board; and
Fig. 9A and Fig. 9B are a perspective view and a sectional view showing a case where a heat-radiation member is fitted to the sealed case.

### PREFERRED EMBODIMENT OF THE INVENTION

An embodiment of the invention is described in detail hereinafter. As the embodiment described hereinafter is preferred specific example in carrying out the invention, various technical limitations are made thereto, however, it is to be pointed out that the invention is not limited thereto unless otherwise explicitly described in the following description.

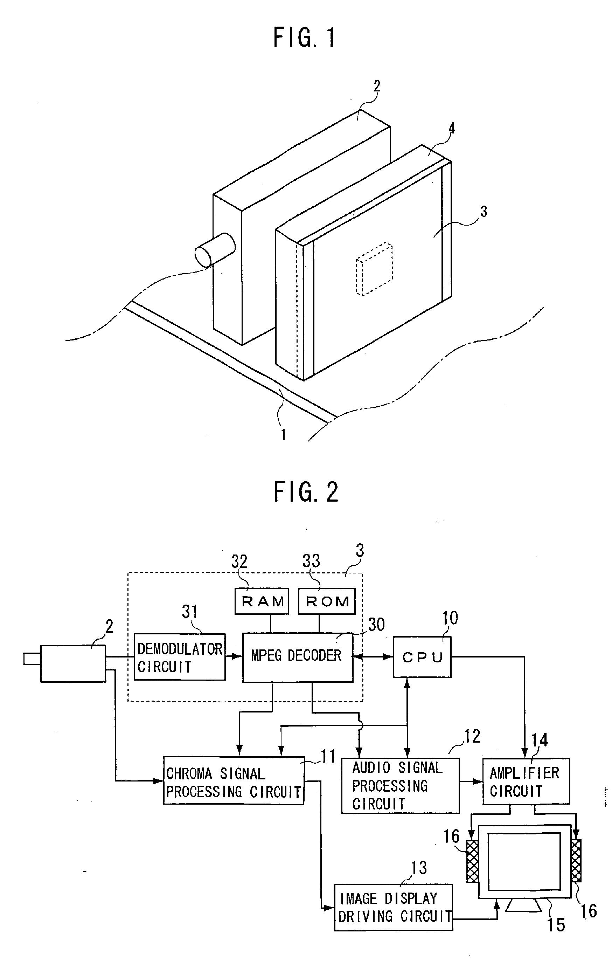

Fig. 1 is an external perspective view according to an embodiment of the invention, and Fig. 2 is a block diagram showing a construction of a TV receiver provided with the embodiment of the invention. A digital broadcast receiving unit comprises a main circuit board 1, a tuner unit 2 capable of receiving a digital broadcast signal and an analog broadcast signal and a digital signal processing circuit board 3 for receiving a signal from the tuner unit 2 to execute a digital signal processing, wherein the tuner unit 2 and the digital signal processing circuit board 3 are respectively mounted on the main circuit board 1, and a sealed case 4 fitted to the digital signal processing circuit board 3 at a mounting face on which electronic components are mounted.

Both the tuner unit 2 and the digital signal processing circuit board 3 substantially stand upright on the main circuit board 1, respectively, and the digital signal processing circuit board 3 is disposed close to the tuner unit 2 substantially in parallel to the tuner unit 2 along the longitudinal direction thereof.

As shown in Fig. 2, a digital broadcast signal received by the tuner unit 2 is converted into an IF signal, to be subsequently inputted to a demodulator circuit 31. The digital signal demodulated by the demodulator circuit 31 is decoded by an MPEG decoder 30, to be subsequently analogized, whereby an image signal is inputted to a chroma signal processing circuit 11, and an audio signal is inputted to an audio signal processing circuit 12. An analog broadcast signal received by the tuner unit 2 is converted into an IF signal, to be subsequently inputted to the chroma signal processing circuit 11. A CPU 10 controls each circuit, and the image signal is inputted to an image display driving circuit 13, to be subsequently displayed on a display unit 15 as image. Further, the audio signal is inputted to an amplifier circuit 14, to be subsequently outputted from a speaker 16 as audio.

The MPEG decoder 30, the demodulator circuit 31, electronic components such as a RAM 32 and a ROM 33, and so forth are mounted on the digital signal processing circuit board 3.

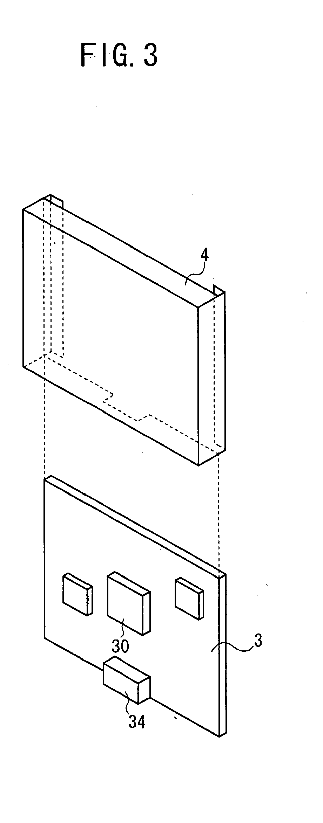

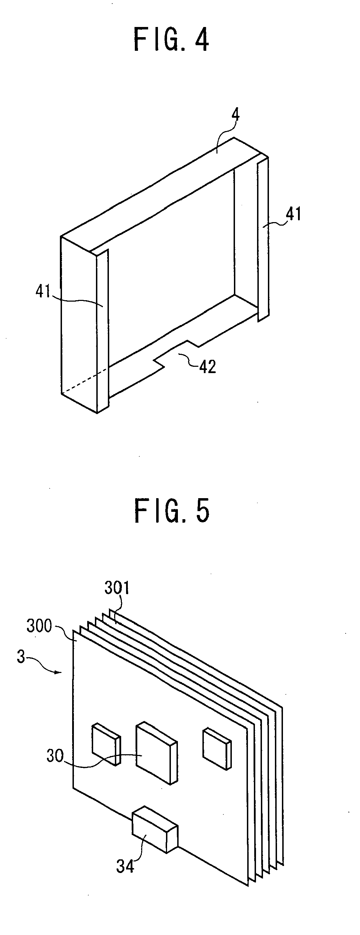

Fig. 3 is an exploded perspective view relating to the digital signal processing circuit board 3 and the sealed case 4. ICs such as the MPEG decoder 30 and so forth and the electronic components such as a connector for electrically connecting between themselves and the main circuit board 1 are respectively mounted on the digital signal processing circuit board 3 at the face facing the tuner unit 2. The sealed case 4 are fitted to the digital signal processing circuit board 3 so as to cover the entire mounting face of the electronic components. As shown in Fig. 4, the sealed case 4 is formed of a metal sheet by bending four corners of the metal sheet and side ends of both side portions thereof are folded inwardly to form insertion parts 41 through which both side ends of the digital signal processing circuit board 3 are inserted. A notch 42 is formed on the bottom portion of the sealed case 4 according to the shape of the connector 34. The sealed case 4 is fitted to the digital signal processing circuit board 3 such that the insertion parts 41 of the sealed case 4 are inserted into the digital signal processing circuit board 3 from above so as to engage the connector 34 with the notch 42. Accordingly, the sealed case 4 is fitted only to the mounting face side of the digital signal processing circuit board 3 and the face opposite to the tuner unit 2 (the face opposite to the mounting face) is exposed without covered with the sealed case 4.

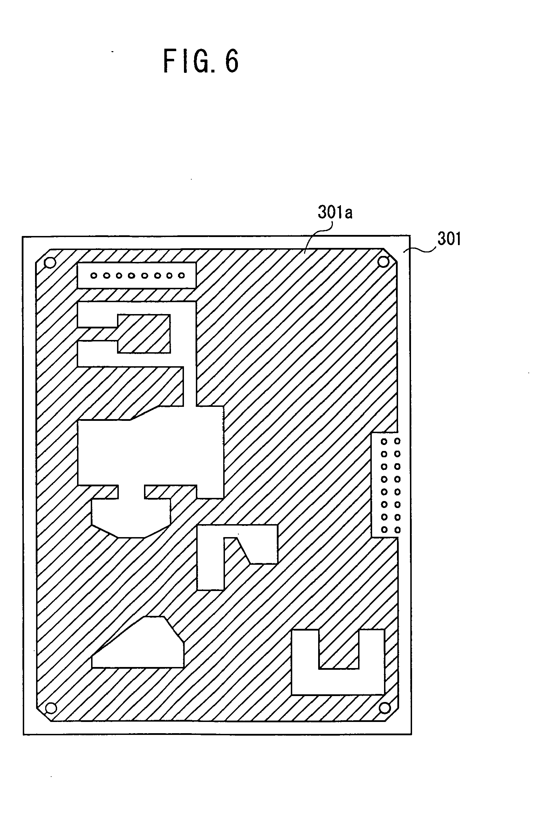

Fig. 5 is a perspective view showing that the digital signal processing circuit board 3 is formed of a multilayer board composed of six layers. Wiring patterns for mounting the electronic components thereon are formed on a layer 300 at the mounting face side of the multilayer board. Ground patterns are formed on a fifth layer of the digital signal processing circuit board 3 counting from the layer 300 at the mounting face side. Fig. 6 shows one example of the ground patterns formed on the layer 301. The layer 301 has a conductive layer formed of a metal foil at the portion hatched by diagonal lines and it becomes a ground potential in a state where the digital signal processing circuit board 3 is fitted to the main circuit board 1. The areas of the ground patterns formed on the digital signal processing circuit board 3 are set to occupy 50% or more of the area of the digital signal processing circuit board 3 so as to enhance the sealed effect by the ground patterns. Although the maximum sealed effect can be attained if the ground patterns are formed on the entire surface of the digital signal processing circuit board 3 (100% of the area of the digital signal processing circuit board 3), the inventors could confirm that the sealed effect was the same or greater than that in the case where the digital signal processing circuit board 3 is covered with the sealed case 4 by the area 50% or more of the digital signal processing circuit board 3, upon measurement of the sealed effect by increasing the areas of the ground patterns by 10% of the area of the digital signal processing circuit board 3. Accordingly, if the ground patterns have areas occupying 50% or more of the digital signal processing circuit board 3, a sealed effect of a practical level can be attained.

Meanwhile, although the digital signal processing circuit board 3 is formed of a multilayer board according to this example, if the ground patterns are formed on the digital signal processing circuit board 3 at the side opposite to the tuner unit 2, the same effect can be attained, and hence the digital signal processing circuit board 3 is not limited to be formed of the multilayer board.

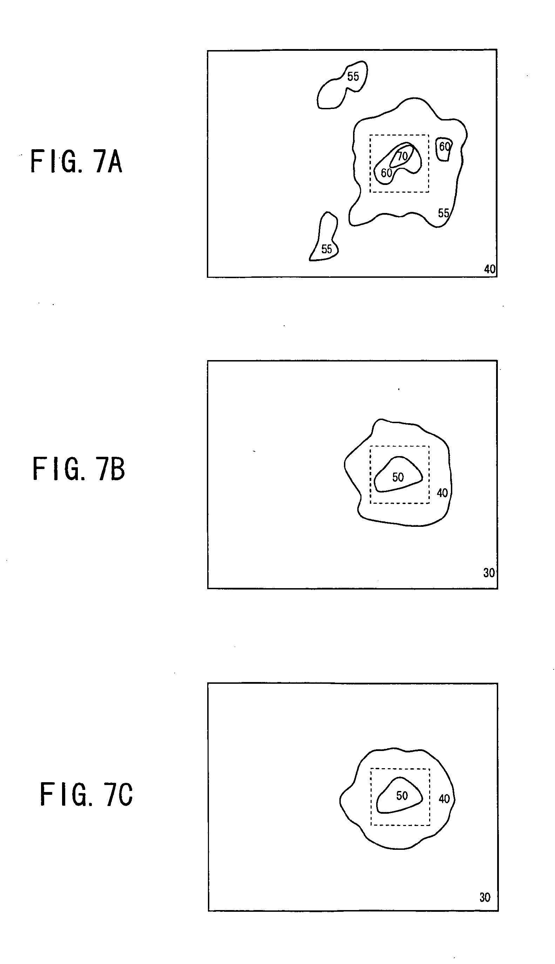

Fig. 7 shows results of experiment representing the sealed effect caused by the ground patterns which were confirmed by the experiment. In Fig. 7A, an experiment is carried out by use of the digital signal processing circuit board 3 in a state where the sealed case 4 is not fitted to the digital signal processing circuit board 3. The ground patterns of the digital signal processing circuit board 3 were used as the ground patterns of the conventional digital signal processing circuit board, and the ground patterns have areas occupying 30% of the digital signal processing circuit board 3. Upon measurement by a measuring unit (manufactured by Hitachi display device Co., Ltd.) from the side opposite to the mounting face, a strongest noise (55 to 70dB) was measured at the periphery of the MPEG decoder 30 where the strongest noise is frequently generated. In Fig. 7B, upon measurement which was likewise carried out in such a manner that the sealed case 4 is fitted to the digital signal processing circuit board 3 so as to cover both sides of the digital signal processing circuit board 3 in a hermetically sealed state, the reduction of the noise on the order of 15 to 20dB was measured at the periphery of the MPEG decoder 30. In Fig. 7C, the similar measurement was carried out by using the same ground patterns of the digital signal processing circuit board 3 as those shown in Fig. 6, and fitting the sealed case 4 to the digital signal processing circuit board 3 at the mounting face side alone Also in this case, the reduction of the noise on the order of 15 to 20dB was measured at the periphery of the MPEG decoder 30, and the sealed effect having substantially the same level as that in the case where the sealed case 4 is fitted to both sides of the digital signal processing circuit board 3 was attained.

As described above, since the sealed case 4 is fitted to the digital signal processing circuit board 3 at the mounting face side while facing the tuner unit 2, and the ground patterns are formed at the side opposite to the tuner unit 2, it is possible to restrain the influence of the noise exerted upon the tuner unit 2, and regarding the influence exerted upon the outside, it is possible to attain the same sealed effect as the case where the sealed case 4 is fitted to the digital signal processing circuit board 3. Further, the intrusion of the nose into the digital signal processing circuit board 3 from the outside is also restrained.

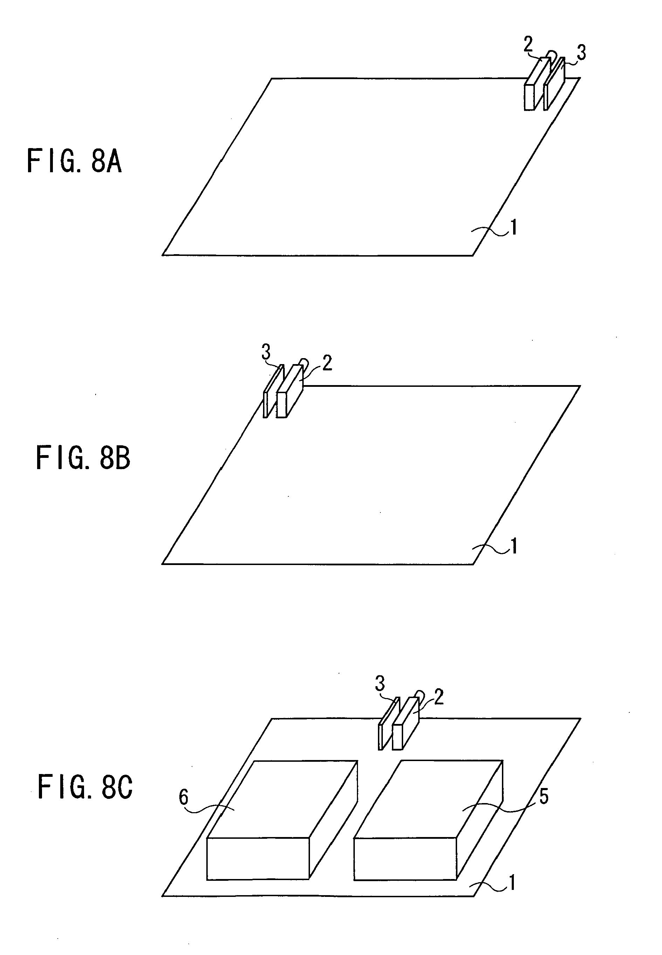

Consequently, according to the digital broadcast receiving unit of the invention, since the influence of the noise exerted upon the outside is restrained, so that the tuner unit 2 and the digital signal processing circuit board 3 can be disposed at either location of the main circuit board 1. For example, as shown in Fig. 8, if the tuner unit 2 and the digital signal processing circuit board 3 are disposed at the corner of the main circuit board 1 (Fig. 8A and Fig. 8B), the digital signal processing circuit board 3 is disposed outside so that the influence of the noise exerted upon the electronic components and wirings on the main circuit board 1 can be further restrained. Further, as shown in Fig. 8C, the tuner unit 2 and the digital signal processing circuit board 3 can be disposed at the central portion of the main circuit board 1 while a DVD unit 5 and an HDD unit 6 are disposed on the main circuit board 1. Even in this case, the influence of the noise from the digital signal processing circuit board 3 can be restrained from being exerted upon the outside, and also the influence of the noise exerted from the outside can be also restrained.

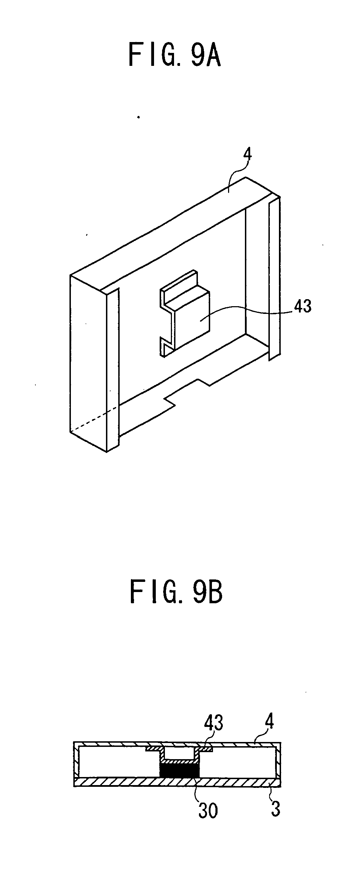

Fig. 9 is a perspective view (Fig. 9A) and a sectional view (Fig. 9B) showing an example of a case where a heat-radiation member 43 is fitted to an inner face of the sealed case. The heat-radiation member 43 is comprised of a metal sheet molded in a convex, and fixed to the inner face of the sealed case 4. The heat-radiation member 43 is set in height so as to come in contact with the entire upper face of the IC of the MPEG decoder 30 in a state where the sealed case 4 is fitted to the digital signal processing circuit board 3. Accordingly, heat generated in the IC is effectively transferred from the heat-radiation member 43 to the sealed case 4, and radiated from the sealed case 4 to the outside. In particular, since the digital signal processing circuit board 3 is disposed close to the tuner unit 2 and a heat source of the IC and so forth is mounted on the digital signal processing circuit board 3 at the side facing the tuner unit 2, heat is liable to be stored therein. However, since the radiating effect is enhanced by the sealed case 4 in whole, the influence caused by heat can be restrained. Further, since the heat-radiation member 43 is made of a metal, the sealed effect of the electromagnetic waves leaked from the ICs can be enhanced.

## Claims

1. A digital broadcast receiving unit comprising a tuner unit (2) for receiving a digital broadcast signal, a digital signal processing circuit board (3) disposed close to the tuner unit (2) in a longitudinal direction thereof for processing an output signal issued from the tuner unit (2), a main circuit board (1) for mounting the tuner unit (2) and the digital signal processing circuit board (3) thereon, wherein the digital signal processing circuit board (3) has a mounting face on which electronic components are mounted at a side facing the tuner unit (2) and a sealed case (4) for covering the mounting face alone is fitted to the digital signal processing circuit board (3), and ground patterns are formed on the digital signal processing circuit board (3) at a side opposite to the tuner unit (2).

2. A digital broadcast receiving unit according to Claim 1, wherein the ground patterns formed on the digital signal processing circuit board (3) have areas occupying 50% or more of the digital signal processing circuit board (3).

3. A digital broadcast receiving unit according to Claim 1, wherein the sealed case (4) has a heat-radiation member (43) coming in contact with the electronic components mounted on the digital signal processing circuit board (3).
